Europäisches Patentamt

European Patent Office

Office européen des brevets

(11) Publication number: **0 112 421**
**B1**

(12) **EUROPEAN PATENT SPECIFICATION**

(45) Date of publication of patent specification: **23.04.86**

(21) Application number: **82306943.0**

(22) Date of filing: **23.12.82**

(51) Int. Cl.⁴: **B 60 K 17/34**

(54) **Four-wheel drive vehicle.**

(43) Date of publication of application:
**04.07.84 Bulletin 84/27**

(45) Publication of the grant of the patent:
**23.04.86 Bulletin 86/17**

(84) Designated Contracting States:
**AT BE DE FR GB IT NL SE**

(56) References cited:
**EP-A-0 063 706
DE-A-2 747 786
GB-A-1 411 283
GB-A-2 074 517
US-A-3 656 573
US-A-3 828 877
US-A-4 344 335**

(73) Proprietor: **DEERE & COMPANY
1 John Deere Road
Moline Illinois 61265 (US)**

(72) Inventor: **Weiss, Heinz
Volgerstrasse 24
D-6140 Bensheim (DE)**

(74) Representative: **Pears, David Ashley et al
REDDIE & GROSE 16 Theobalds Road
London WC1X 8PL (GB)**

Courier Press, Leamington Spa, England.

# Description

The present invention relates to a four-wheel drive vehicle with divided power flow from an engine to a rear axle and a front axle via a differential. The differential in question may be referred to as a longitudinal differential since it divides the power flow longitudinally of the vehicle, i.e. between the front and rear axles. Each such axle may additionally include its own differential which is a transverse differential dividing the power flow between left and right wheels.

Four-wheel drive is being introduced in industrial and agricultural vehicles to an ever increasing extent. Examples are tractors with front and rear wheels of different diameter and axle steering, vehicles with axle steering on the rear or on both axles and articulated vehicles with front and rear wheels of equal diameters and articulation steering.

In such vehicles the rear axle drive is always engaged when the vehicle is moving. However it is customary for the front axle drive to be selectively engaged and disengaged. The reason for this is that, if the front and rear axles are coupled when the vehicles is travelling on the road, there is excessive tyre wear because the front wheels are customarily over-driven by about 2 to 3% relative to the rear wheels. When travelling on a metalled road with four-wheel drive the tyres are therefore seriously abraded.

In order to disengage the drive to the front axle there may be employed a dog clutch but this has the disadvantage that it can only be engaged and disengaged while the vehicle is at rest. It is therefore known to employ multiplate hydraulically operated couplings which can be engaged and disengaged on the go. Such a coupling may also be operated as a safety coupling under conditions when traction is lost at one axle.

A hydraulically operated, multiplate coupling is an expensive component having regard not only to its inherent construction but to the means for feeding hydraulic fluid thereto. Moreover, when the coupling is disengaged it is driven by the front wheels and significant frictional losses occur therein. There are thus considerable disadvantages with the conventional provision of a disengageable coupling for the front wheel drive.

In order to attain the necessary braking action in vehicles such as agricultural tractors it is becoming increasingly common to brake the front wheels as well as the rear wheels, either directly at the front wheels themselves or by way of the drive path thereto. One technique is to utilise the rear wheel brakes to act also on the front wheels but this requires the front wheel drive coupling to be momentarily engaged whenever the vehicle is braked when travelling on the road. The necessary ·control arrangements represent another undesirable expense, particularly in the case of four-wheel drive vehicles in the lower and medium power ranges.

The object of the present invention is therefore to divide the power flow between the front and rear axles in such a way that the correct gearing therebetween is automatically established under all operating conditions. A further object of the invention is to make possible better braking arrangements for a vehicle, in particular to allow the rear wheel brakes to brake the front axle also without any need for expensive control arrangements.

It is already known to utilise a longitudinal differential between the front and rear axles of a four-wheel drive vehicle. The solution proposed by the present invention starts from this known arrangement and the invention is characterised in that the longitudinal differential has a non-unity transmission ratio G between the parts thereof coupled to the two axles, such that, at least approximately,

$$R_F I_F = G R_R I_R$$

where

$R_F$ and $R_R$ are the radii of the front and rear wheels respectively, and

$I_F$ and $I_R$ are the reduction ratios from the longitudinal differential to the front and rear wheels respectively.

In order to achieve the required transmission ratio G it is convenient for the longitudinal differential to be an epicyclic gear. Moreover, having regard to the customary situation in which more power must flow to the rear axle than to the front axle, it is convenient to couple the planet carrier to the engine, the sun wheel to a front transmission shaft leading to the front axle and the annulus to the rear transmission shaft leading to the rear axle.

Various arrangements for braking the vehicle are possible. Since the two axles are now permanently coupled by way of the longitudinal differential it is possible to rely exclusively upon suitably dimensioned brakes at the rear wheels. Alternatively, a brake for the front wheels may also be provided and this conveniently acts on the front transmission shaft and can be constructionally integrated into the longitudinal differential. In the interest of rational production this brake may be of the same construction as the rear wheel brakes.

Various possibilities also exist for controlling the brakes. According to one possibility, the rear wheel brakes and the front wheel brake are operated in parallel. Alternatively provision may be made for independent control and it is then possible, by partial actuation of the front wheel brake to increase the torque at the rear wheels, or even to increase the torque at the front wheels by partial actuation of the rear wheel brakes. Moreover, either rear wheel brake may be operated independently when slip occurs at the corresponding wheel, in order to increase the torque at the other wheels.

Control of the brakes under conditions of slip may be effected automatically by a control circuit provided with information from speed sensors which indicate the speed of rotation at various points. It may be sufficient to provide a sensor on each half axle at the rear of the vehicle and a speed sensor on the front transmission shaft. It may also be desirable to provide a sensor on the rear transmission shaft. Alternatively, separate sensors may be provided on all four half shafts.

Both axles preferably incorporate their own transverse differentials and the rear axle differential can preferably be locked. Various mechanical and hydraulic mechanisms are known for locking differentials and it is preferred to adopt the type of mechanism which is hydraulically operated and can moreover be engaged on the go. The aforementioned control circuit can also control the differential lock in a manner known per se.

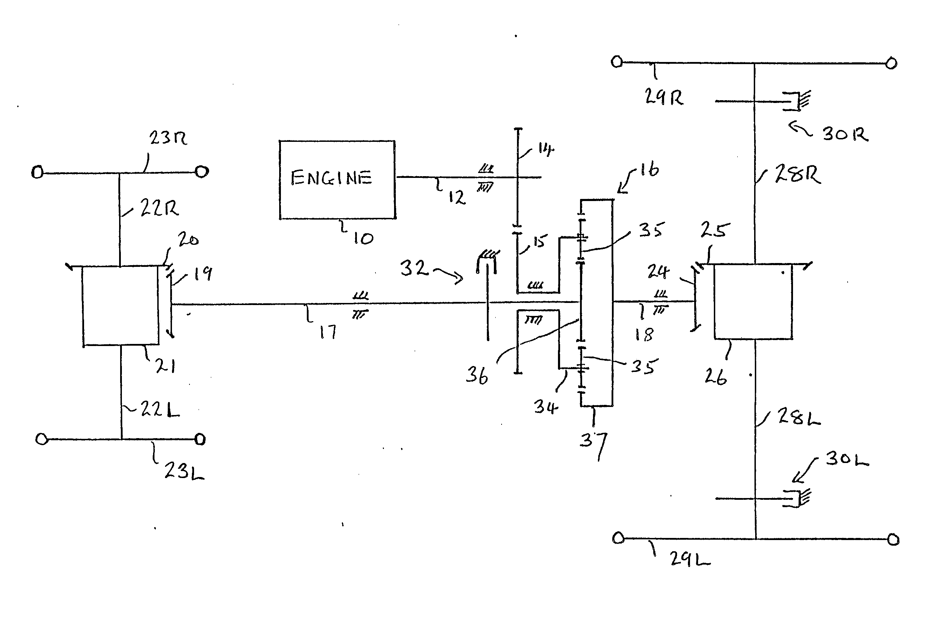

An embodiment of the invention will now be described in more detail, by way of example, with reference to the sole Figure of the accompanying drawing which is a schematic plan view of a four-wheel drive tractor. The drawing does not show certain features which can follow conventional practice. In particular the means for steering are not shown although axle steering of the front wheels may be assumed. Final drive reduction units are not shown although these may be incorporated conventionally at the front wheels and even at the rear wheels.

The tractor comprises an engine 10 driving an engine shaft 12 which is coupled to a longitudinal differential 16 by way of spur gears 14 and 15. The differential 16 divides the power flow between a front transmission shaft 17 and a rear transmission shaft 18. The front transmission shaft 17 drives a front transverse differential 21 via bevel gears 19 and 20 and differential 21 divides the power flow between front half axles 22L and 22R for the small diameter front wheels 23L and 23R respectively.

Similarly the rear transmission shaft 18 drives a rear transverse differential 26 via bevel gears 24 and 25 and this differential divides the power flow between half shafts 28L and 28R for the large diameter rear wheels 29L and 29R respectively.

Rear wheel breaks 30L and 30R are provided on the rear half shafts 28L and 28R. A further brake 32 for the front wheels may be provided on the front transmission shaft 17.

Turning now to the construction of the longitudinal differential 16, the driven spur gear 15 is integral with the planet carrier 34 of the differential. The planet wheels 35 mesh in customary manner with a sun wheel 36 and an annulus 37. The sun wheel 36 is keyed onto the front transmission shaft 17 while the annulus 37 is keyed to the rear transmission shaft 18. By suitable selection of the diameters of the sun wheel, planet wheels and annulus it is possible to achieve the required transmission ratio G in order to achieve the required relationship set out above, namely

$$R_F I_F = G R_R I_R$$

The rear transverse differential 26 preferably incorporates a differential lock, preferably a hydraulically operated lock which can be engaged on the go. The brakes may be individually controlled as explained above in response to sensors provided, for example, on the half shafts 28L and 28R and the transmission shaft 17.

It will be understood that when the ground conditions deteriorate at just one of the front wheels or one of the rear wheels, the corresponding transverse differential 21 or 26 takes account of the resulting slip and, if necessary, the rear differential 26 is automatically locked. The longitudinal differential 16 is unaffected under these conditions.

If the front axle is loaded excessively, e.g. by a front-mounted implement, the rear axle is relieved of load and this may cause slip at both rear wheels. This acts as an automatic safety factor because the slip will prevent the front axle being subjected to excessive torque. Even although there is slip at the rear, the rear brakes 30L and 30R remain effective since they act also by way of the longitudinal differential 16 on the front axle. For this reason the front brake 32 may be omitted, particularly in smaller vehicles where adequate braking can be achieved by the rear brakes only.

When a large implement is mounted at the rear of the tractor, the front axle has its load reduced and slip can increase at the front wheels. When the front axle load falls below a critical value, traction is lost at the front wheels although the brakes remain fully functional. This can also be utilised as a safety factor but it may be preferred to guarantee adequate front axle loading by the provision of dynamic centre of gravity adjustment, known per se.

**Claims**

1. A four-wheel drive vehicle with divided power flow from an engine to a rear axle and a front axle via a longitudinal differential, characterised in that the longitudinal differential has a non-unity transmission ratio G between the parts thereof coupled to the two axles, such that, at least approximately,

$$R_F I_F = G R_R I_R$$

where

$R_F$ and $R_R$ are the radii of the front and rear wheels respectively, and

$I_F$ and $I_R$ are the reduction ratios from the longitudinal differential to the front and rear wheels respectively.

2. A vehicle according claim 1, characterised in that the longitudinal differential (16) is an epicyclic gear with a first element (34) coupled to the engine (10), a second element (36) coupled to a front shaft (17) leading to the front axle (22L, R) and a third element (37) coupled to a rear shaft (18) leading to the rear axle (28L, R).

3. A vehicle according to claim 2, characterised in that the first, second and third elements are a planet carrier (34), a sun wheel (36) and an annulus (37) respectively.

4. A vehicle according to claim 1, 2 or 3, wherein each axle includes a transverse differential, characterised in that the rear axle transverse differential (26) has a hydraulically operated lock which can be engaged on the go.

5. A vehicle according to any of claims 1 to 4, characterised by individual brakes (30L, 30R) for the rear wheels (29L, 29R) and a single brake (32) for the front wheels (23L, 23R).

6. A vehicle according to claim 5, characterised in that the brake (32) for the front wheels is integrated with the longitudinal differential (16).

7. A vehicle according to claim 5 or 6, characterised in that the brake (32) from the front wheels (23L, 23R) is constructionally the same as the brakes (30L, 30R) for the rear wheels (29L, 29R).

8. A vehicle according to any of claims 5 to 7, characterised in that all the brakes (30L, 30R, 32) are connected in parallel.

9. A vehicle according to any of claims 5 to 7, characterised by means for operating the front wheel brake (32) independently to increase the torque at the rear wheels (29L, 29R).

10. A vehicle according to any of claims 5 to 7, characterised by means for braking the rear wheel brakes (29L, 29R) in order to increase the torque at the front wheels (23L, 23R).

11. A vehicle according to any of claims 5 to 7, characterised by means responsive to slip of one rear wheel (29L, or 29R) to actuate the corresponding brake (30L or 30R).

12. A vehicle according to any of claims 5 to 11, characterised by sensors responsive to at least the speeds of the rear axle half-shafts (28L, 28R) to control the brakes (30L, 30R, 32) and/or the lock of the rear axle transverse differential (26).

## Patentansprüche

1. Fahrzeug mit Vierradantrieb mit geteiltem Fluß der Antriebskraft von einer Kraftmaschine zu einer rückwärtigen Achse und einer Frontachse über ein Längsdifferential, dadurch gekennzeichnet, daß das Längsdifferential ein nicht einheitliches Transmissionsverhältnis G zwischen seinen Teilen aufweist, die mit den beiden Achsen gekuppelt sind derart, daß wenigstens annähernd

$$R_F I_F = G R_R I_R$$

worin

$R_F$ und $R_R$ die Radien der Vorderräder bzw. Hinterräder und $I_F$ und $I_R$ jeweils die Untersetzungsverhältnisse von dem Längsdifferential zu den Vorderrädern bzw. zu den Hinterrädern sind.

2. Fahrzeug nach Anspruch 1, dadurch gekennzeichnet, daß das Längsdifferential (16) ein epizyklisches Getriebe mit einem ersten Element (34) ist, das mit der Kraftmaschine (10) gekuppelt ist, einem zweiten Element (36), das mit einer Frontwelle (17) gekuppelt ist, die zu der Vorderachse (22L, R) führt, und mit einem dritten Element (37), das mit einer rückwärtigen Welle (18) gekuppelt ist, die zu der rückwärtigen Achse (28L, R) führt.

3. Fahrzeug nach Anspruch 2, dadurch gekennzeichnet, daß die ersten, zweiten und dritten Elemente jeweils ein Planetenradträger (34), ein Sonnenrad (36) und ein Ring (37) sind.

4. Fahrzeug nach Anspruch 1, 2 oder 3, bei dem jede Achse ein Querdifferential umfaßt, dadurch gekennzeichnet, daß das Querdifferential (26) der rückwärtigen Achse eine hydraulisch betätigbare Sperre aufweist, die während der Fahrt in Eingriff gebracht werden kann.

5. Fahrzeug nach irgendeinem der Ansprüche 1 bis 4, gekennzeichnet durch individuelle Bremsen (30L, 30R) für die rückwärtigen Räder (29L, 29R) und eine einzige Bremse (32) für die Vorderräder (23L, 23R).

6. Fahrzeug nach Anspruch 5, dadurch gekennzeichnet, daß die Bremse (32) für die Vorderräder mit dem Längsdifferential (16) integriert ist.

7. Fahrzeug nach Anspruch 5 oder 6, dadurch gekennzeichnet, daß die Bremse (32) für die Vorderräder (23L, 23R) konstruktiv die gleiche ist wie die Bremsen (30L, 30R) für die rückwärtigen Räder (29L, 29R).

8. Fahrzeug nach irgendeinem der Ansprüche 5 bis 7, dadurch gekennzeichnet, daß alle Bremsen (30L, 30R, 32) parallel geschaltet sind.

9. Fahrzeug nach irgendeinem der Ansprüche 5 bis 7, gekennzeichnet durch Mittel zum Betätigen der Vorderradbremse (32) unabhängig von der Zunahme des Drehmomentes an den rückwärtigen Rädern (29L, 29R).

10. Fahrzeug nach irgendeinem der Ansprüche 5 bis 7, gekennzeichnet durch Mittel zum Bremsen der rückwärtigen Radbremsen (29L, 29R), um das Drehmoment an den Vorderrädern (23L, 23R) zu vergrößern.

11. Fahrzeug nach irgendeinem der Ansprüche 5 bis 7, gekennzeichnet durch Mittel, die auf den Schlupf eines rückwärtigen Rades (29L oder 29R) ansprechen, um die entsprechende Bremse (30L oder 30R) zu betätigen.

12. Fahrzeug nach irgendeinem der Ansprüche 5 bis 11, gekennzeichnet durch Sensoren, die wenigstens auf die Geschwindigkeiten der Halbwellen (28L, 28R) der rückwärtigen Achse ansprechen, um die Bremsen (30L, 30R, 32) und/oder die Sperre des Querdifferentials (26) der rückwärtigen Achse zu steuern.

## Revendications

1. Véhicule à quatre roues motrices avec transmission répartie ou divisée de l'énergie, à partir d'un moteur, à un essieu arrière et à un essieu avant, par l'intermédiaire d'un différentiel longitudinal, caractérisé en ce que le différentiel longitudinal présente un rapport de transmission G différent de l'unité entre ses organes accouplés aux deux essieux, de telle sorte qu'au moins de façon approximative

$$R_F I_F = G R_R I_R$$

où

$R_F$ et $R_R$ sont les rayons des roues avant et arrière respectivement, et $I_F$ et $I_R$ sont les rapports de réduction entre le différentiel longitudinal et les roues avant et arrière respectivement.

2. Véhicule suivant la revendication 1, caractérisé en ce que le différentiel longitudinal (16) est un train épicycloïdal comprenant un premier élément (34) accouplé au moteur (10), un second élément (36) accouplé à un arbre avant (17) aboutissant à l'essieu avant (22L, R) et un troisième élément (37) accouplé à un arbre arrière (18) aboutissant à l'essieu arrière (28L, R).

3. Véhicule suivant la revendication 2, caractérisé en ce que le premier, le second et le troisième éléments sont constitués par un porte-satellites (34), un planétaire (36) et une couronne dentée (37) respectivement.

4. Véhicule suivant la revendication 1, 2 ou 3, dans lequel chaque essieu comporte un différentiel transversal, caractérisé en ce que le différentiel transversal (26) de l'essieu arrière comporte un mécanisme de blocage à actionnement hydraulique qui peut être enclenché en marche.

5. Véhicule suivant l'une quelconque des revendications 1 à 4, caractérisé par des freins individuels (30L, 30R) pour les roues arrière (29L, 29R) et par un frein unique (32) pour les roues avant (23L, 23R).

6. Véhicule suivant la revendication 5, caractérisé en ce que le frein (32) prévu pour les roues avant est intégré au différentiel longitudinal (16).

7. Véhicule suivant la revendication 5 ou 6, caractérisé en ce que le frein (32) prévu pour les roues avant (23L, 23R) est constructivement identique aux freins (30L, 30R) prévus pour les roues arrière (29L, 29R).

8. Véhicule suivant l'une quelconque des revendications 5 à 7, caractérisé en ce que tous les freins (30L, 30R, 32) sont connectés en parallèle.

9. Véhicule suivant l'une quelconque des revendications 5 à 7, caractérisé par des moyens pour actionner le frein (32) des roues avant de façon indépendante, afin d'augmenter le couple sur les roues arrière (29L, 29R).

10. Véhicule suivant l'une quelconque des revendications 5 à 7, caractérisé par des moyens pour actionner les freins (29L, 29R) des roues arrière, afin d'augmenter le couple sur les roues avant (23L, 23R).

11. Véhicule suivant l'une quelconque des revendications 5 à 7, caractérisé par des moyens réagissant à un patinage de l'une des roues arrière (29L ou 29R) pour actionner le frein correspondant (30L ou 30R).

12. Véhicule suivant l'une quelconque des revendications 5 à 11, caractérisé par des capteurs réagissant au moins aux vitesses des demi-arbres (28L, 28R) de l'essieu arrière pour commander les freins (30L, 30R, 32) et/ou pour bloquer le différentiel transversal (26) de l'essieu arrière.

ENGINE

0 112 421